# EUROPEAN PATENT APPLICATION

(11) **EP 0 656 728 A2**
(43) Date of publication of application: **07.06.1995**
(21) Application number: 94308456.6
(22) Date of filing: 16.11.1994
(51) Int. Cl.: H04N 7/173, H04N 7/16

(54) **Bi-directional broadcasting system**

(30) Priority: 26.11.1993 JP 296597/93; 22.08.1994 JP 219492/94
(71) Applicant: SONY CORPORATION, Tokyo 141 (JP)
(72) Inventor: Yoshinobu, Hitoshi, Shinagawa-ku, Tokyo 141 (JP)
(74) Representative: Ayers, Martyn Lewis Stanley

(57) **Abstract**

A bi-directional broadcasting system for preparing a plurality of pay video programs and a plurality of channels on the broadcasting side and designating one of the plurality of channels according to the selection of a specific pay video program by the receiving side to thereby broadcast the selected pay video program through the selected channel as occasion demands. In the bi-directional broadcasting system, a predetermined CM is broadcasted according to the allowable degree of video reception by each viewer prior to the broadcasting of the pay video program selected on the receiving side. A dip switch attached to a receiver is set according to the allowable degree of video reception by each viewer. Information about the setting of the dip switch is transmitted to the broadcasting side through a modem upon selecting the pay video program. Further, a control unit for controlling the frequency of reception of CM in the form of a picture is provided in a remote control transmitter. According to the above construction, the broadcasting side can properly correspond to the allowable degree of CM reception by the viewer. When the CM is sent to the viewer, the viewer can reliably watch it.

## Description

The present invention relates to the field of television broadcast systems and more particularly to those systems suitable for use in so called pay TV or video on demand broadcast and reception.

A TV system has heretofore been known wherein television program material is broadcast on VHF and UHF broadcasting frequency bands or via cable broadcast CATV or satellite broadcast systems. Television program material distributed from a broadcast source to a service provider through communications satellite(CS) are typically transmitted at a mid-band or a super high band of a VHF television broadcasting frequency band and may be further distributed to a number of subscribers through transmission media such as a coaxial cable, etc.

Since the multi-channel signals are transmitted in the CATV system as described above, a television receiver designed to receive only open air broadcast UHF & VHF signals, cannot receive all the channels provided in a CATV system. Therefore, a reception terminal (referred to as a "cable box"), CBX, provided with a tuner capable of receiving the aforementioned number of channels according to the type of service contract with a CATV broadcasting company is offered to each of the subscribers by leasing or buying. Video and audio signals are supplied to the television receiver using the cable box. These boxes may be incorporated within the structure of a TV receiver.

In the CATV system, a flat monthly rate is generally paid by a subscriber for broadcast service. The monthly rate is generally fixed regardless of the amount of programs viewed. So called pay-per-view type pay broadcasting provides broadcast programs where a subscriber pays a viewing/audience fee each time program material is viewed. In each of these systems program material is typically broadcast in scrambled form so as to prevent unauthorized viewing thereof. Authorized viewers are generally provided with a de-scrambler for unscrambling the scrambled broadcast material. This de-scrambler is typically provided in the above mentioned cable box.

Information regarding the subscriber's type of contract/service preferences is entered into a database in the head end, or broadcast side. An ID or code which corresponds to the type of contract/services preferences is also registered in the database. This ID code is transmitted to the cable box during broadcast of a program signal to enable the cable box to unscramble the received broadcast program signal.

There is also known an interactive( or bi-directional) CATV system in which communications can be performed between each subscriber and the center, or base, station through a public telephone line. In this case, a modem (modulator-demodulator) for performing conversion between a digital signal and an audio signal is provided in a cable box and is interposed between a telephone set and a line. When a cable is used as bi-directional, communications are made between each subscriber and the center station through the cable.

In the aforementioned bi-directional CATV system, a so-called Video on Demand service capable of providing video programs, such as movies, sporting events or the like, on a pay-per-view basis at a predetermined time in accordance with a request or command issued from each subscriber can also be offered.

In general, a commercial broadcasting station allows viewers to view a desired broadcasting program at no charge by broadcasting a broadcasting program to each viewer over the open airwaves. These broadcasting programs are generally interspersed with commercial messages (CM) from various enterprises/advertisers wishing to advertise and stimulate sales of their respective products or services .

In the pay-per-view type broadcast systems programs broadcasted using the CATV system, for example, may be broadcast without being interspersed with the CM from advertisers. As a result, viewers can typically enjoy uninterrupted, commercial-free viewing of their chosen program broadcast. However, each time the pay program is viewed, the individual viewers must pay an audience charge, or viewing fee. Typically, where no commercial messages or advertisements are broadcast along with a program broadcast, audience charges are more expensive than program broadcasts which include commercial messages. This is due to the fact that advertising fees collected for broadcast of commercial messages help to underwrite the costs associated with providing the program material broadcast. Where there are no advertising fees collected, such costs must generally be obtained through charges (audience fees) to subscribers or viewers of the program broadcast. Current pay TV broadcast systems do not provide the subscriber or viewer with any options as to whether or not they prefer to view a program broadcast with or without commercial messages broadcast therein. Further, current pay TV broadcast systems do not provide the subscriber with the ability to set the level of commercial message which are received/viewed by the subscribers TV/receiver during broadcast of program material.

Further, presently known pay TV program broadcasting systems do not allow for transmitting of broadcast program material in one of two available discrete modes where the first mode corresponds to having the full number, or predetermined maximum, of CM interspersed within the broadcast program much like typical open air TV broadcasts and the second mode of operation corresponds to having a level of less than a predetermined maximum number/level of CM interspersed within the program. Further, typical television receivers or cable boxes on the viewer/subscriber side do not provide the capabilities necessary to allow for reception of a pay program broadcast from a broadcast station in either of these two available discrete modes of operation.

It is an object of the present invention to allow a subscriber of program television service to select the level of commercial message information viewed during reception of program material broadcast from the service provider broadcast station. Further it is an object of the present invention to allow subscriber s to be billed an audience fee based in part upon the level of commercial message received/viewed by the subscriber during broadcast of program material. Still further, it is an object of the present system to allow advertisers to be charged an advertising fee based upon the level, or number, of times the advertisers commercial messages are viewed/broadcast during the broadcast of regular program material.

The apparatus of the present invention incorporates a broadcast station for broadcasting program material and commercial message information to a cable box receiver and for receiving user input data from the cable box receiver. The broadcast station includes a transmitter for encoding and transmitting program material and commercial message information to a cable box receiver; a first storage device for storing subscriber preference information; a second storage device for storing video program material; a third storage device for storing commercial message information; a user input receiver for receiving user input data from the cable box receiver; and a controller for controlling the broadcast of the program material and commercial message information in accordance with the user input data received from the cable box and the subscriber preference information stored in the first storage device. The cable box receiver of the present invention includes a receiver for receiving and decoding program material and commercial message information from a broadcast station and user input means for providing user input data to the broadcast station.

The invention, inter alia, allows the user to designate an "allowable degree of reception" for, e.g. commercial messages, this degree indicating the user's preference or requirement for the maximum amount of commercial messages and the like to be included in the received (or at least displayed) programme material.

The invention will be further described by way of non-limitative example with reference to the accompanying drawings, in which:-
Fig. 1 is a conceptual view for describing one embodiment of a bi-directional broadcasting system according to the present invention;
Fig. 2 is a conceptional view showing the structure of one embodiment of the present invention;
Fig. 3 is a sequential view describing the operation of one embodiment of the present invention;
Fig. 4 is a block diagram showing the structure of a second embodiment of the present invention;
Fig. 5 is a front view illustrating the structure of the present invention;
Fig. 6 is a flowchart describing the operation of the bi-directional broadcast receiving apparatus of the present invention;
Fig. 7 is a view describing the structure of another embodiment of the bi- directional broadcasting system of the present invention;
Fig. 8 is a block diagram showing the structure of another bi-directional broadcast receiving apparatus employed in the bi-directional broadcasting system shown in Fig. 7;
Fig. 9 is a flowchart for describing the operation of the bi-directional broadcast receiving apparatus shown in Fig. 8;
Fig. 10 is a flowchart for describing another operation of the bi-directional broadcast receiving apparatus shown in Fig. 8; and
Fig. 11 is another view of the present invention.

With the foregoing in view, it is an object of the present invention to provide a pay program broadcasting system capable of sending CM to individual viewers in one of two discrete modes of operation. The present invention has a receiving apparatus of a type wherein the individual viewers can selectively receive the CM broadcasted under one of two discrete modes of operation, and a remote control device capable of remote-controlling the receiving apparatus in such a manner that the receiving apparatus can selectively receive a desired level of CM of interspersed within a program broadcast.

In the present invention, an audience charge, or viewing fee, may be varied depending upon the amount or level of CM which is interspersed within the broadcast program. More particularly, the present invention allows each subscriber to select the level, or allowable degree, of CM which will be interspersed within the program broadcast. The allowable degree of CM may vary from a minimum allowable degree of having no commercial messages interspersed within the program broadcast to a maximum allowable degree of having a predetermined maximum number of commercial messages interspersed within the program broadcast. The allowable degree may also be set at any level between the minimum allowable degree and the maximum allowable degree. In the preferred embodiment of the present invention, the allowable degree of CM is related, or tied to the type of service plan/contract entered into by the subscriber. Typically, the greater the audience charge for viewing broadcast program material, the lesser the degree of CM interspersed within the program broadcast. Conversely, the less the audience charge, the more CM which will be interspersed within the broadcast program.

According to one aspect of the present invention there is provided a bi- directional broadcasting system for preparing a plurality of pay video programs on the broadcasting side and designating one of a plurality of channels for broadcasting the video programs in accordance with a selection, or request, command received by the broadcasting side from the receiving side, or subscriber, to initiate the broadcast of the selected pay video program through the selected channel. In the present invention a predetermined level of advertisements or CM are broadcast along with the selected pay video program accordance with the allowable degree of CM reception set for the receiving side or subscriber.

According to a second aspect of the present invention there is provided a bi- directional broadcast receiving apparatus, or receiver, which incorporates a selecting means capable of selectively receiving a plurality of broadcast channels from a broadcast station, or side, and a communicating means capable of communicating with a broadcasting side so as to request the broadcasting side to broadcast a desired video program. The selecting means selects one of the plurality of channels, which is designated by the broadcasting side for broadcasting the video program, to thereby receive the broadcast of the desired video program. The bi-directional broadcast receiving apparatus also incorporates a reception setting mean, or reception limiter, for setting, or limiting, the allowable degree of advertisements broadcasted from the broadcasting side which will be interspersed in the desired video program.

According to a third aspect of the present invention, there is provided a remote control device suitable for use in a bi-directional broadcast receiving apparatus, which is capable of controlling a allowable degree of reception selecting means, or reception level selector, of the bi-directional broadcast receiving apparatus. This remote control device includes an allowable-degree-of-reception controlling means, or reception limiter, for controlling the allowable degree, or level, of reception of an advertisement image/message, or CM, received along with a desired video program by the bidirectional broadcast receiving apparatus.

According to one embodiment of the present invention, the advertisement image/message, or CM, is sent from the broadcasting side in accordance with the allowable degree of CM reception desired, or selected, by each viewer, or subscriber. The allowable degree of CM reception selected by each subscriber is registered in advance of the selection or broadcast of program material, in the broadcasting side. Data representing this allowable degree of CM reception, or CM data, may be stored in a memory storage device included as a part of the broadcasting side and can be recalled upon broadcast of program material to intersperse the desired level of CM within the broadcast in accordance with the CM data recalled from memory. Alternatively, data representing the allowable degree of CM reception may be transmitted from the receiving side upon selecting or requesting the broadcast of program materia to effect the desired level of CM interspersed within the broadcast program material.

According to the second embodiment of the present invention, information about the allowable degree of video reception by each viewer, which has been set via the allowable-degree -of-reception setting means is registered in the broadcasting side in advance of requesting the broadcast of program material or upon transmission of the request for broadcast of the program material. The advertisement image/message is then transmitted from the broadcasting side in accordance with the allowable degree of reception selected or set for by each viewer or subscriber.

Furthermore, according to the third embodiment of the present invention, the allowable-degree-of-reception setting means may be operated to update, or change, data representing the allowable degree of CM transmitted from the broadcasting side during transmission of program material.

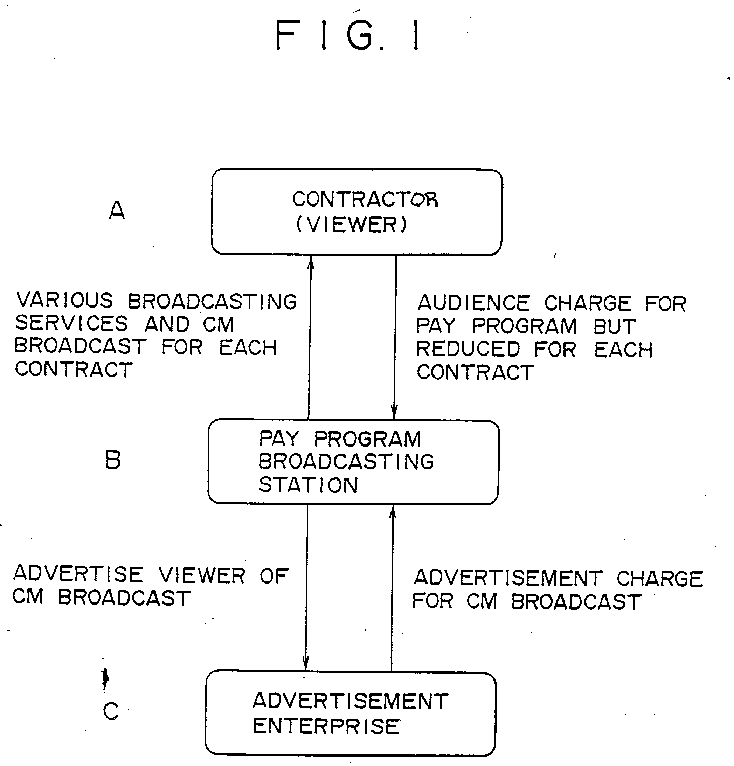

Preferred embodiments of the present invention will hereinafter be described in detail with reference to the accompanying drawings. One embodiment of a bi-directional broadcasting system according to the present invention will be described below with reference to Figs. 1 through 3.

In the embodiment illustrating a bi-directional broadcasting system, a pay-program broadcasting station B provides a pay-program broadcast subscriber (viewer) A with various broadcasting services as shown in Fig. 1. Further, the pay-program broadcasting station B provides the subscriber with a commercial message, or CM, broadcast for each subscriber upon broadcasting a pay program. The subscriber pays the broadcasting station an audience charge, or fee, in order to receive and view the pay program. The audience charge may be reduced by a predetermined amount according to the contract, or type of service preferences selected by the subscriber. More particularly, the reduction in the audience charge may be based upon the allowable degree of CM selected/set by the subscriber. That is, the audience charge/subscriber fee may be increased/decreased depending upon the level, or allowable degree, of CM broadcast selected/set by each subscribe to be interspersed within broadcast/received program material. This level may range from a level/allowable degree at which no CM is interspersed within the broadcast program material to a level at which a predetermined maximum level, or number of CM are interspersed within the broadcast program. selected plurality of times of CM per pay program (or per hour necessary for broadcasting a pay program)are interspersed with CM, for example, are broadcasted. Further, audience fee may be based upon the timing of CM broadcasting. For instance, whether CM are broadcast at a time which interrupts the broadcast program material, or whether CM is broadcast just prior to, or after the program broadcast so as to avoid interruption of the broadcast program material.

The operator s of pay-program broadcasting station B can generate income from businesses/advertisers who want to promote their products/services to the public/subscribers via CM broadcast during/along with broadcast program material. By providing subscribers the option to limit the level of CM received during/along with a broadcast program material subscriber s have the clear option to limit or completely inhibit the receipt of CM broadcasts. This is clearly in contrast to the desires of the advertisers who want to have CM promoting their products/services fully received/viewed by subscribers to program broadcast services. Advertisers can, however, encourage subscriber s to select/set an a allowable degree of CM reception which allows no/little limitation of interspersed CM during program broadcast by subsidizing the audience fee charged by the broadcast service provider for no/little limitation of interspersed CM broadcast along with program material, thereby making such service more attractive to subscriber s due to the lower audience fee.

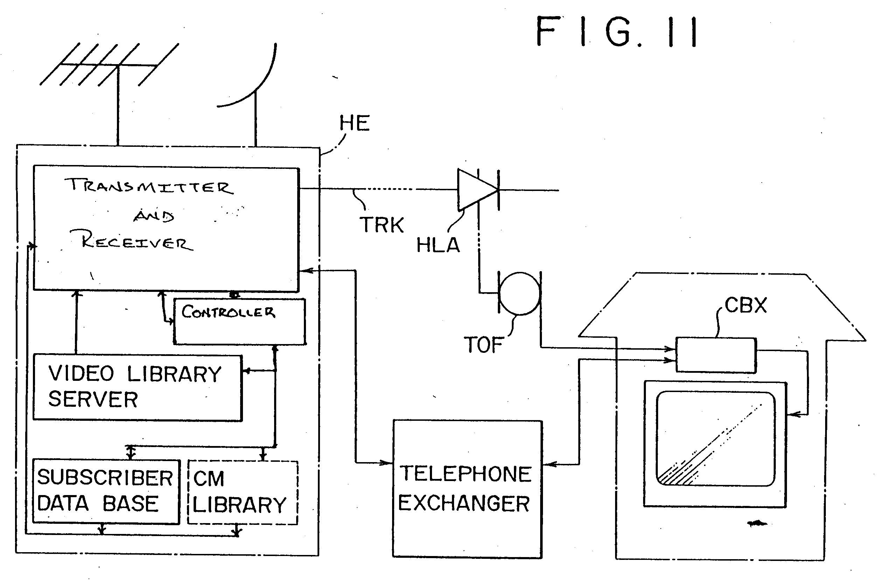

In the illustrated embodiment, a CM library is prepared in a center station in a CATV system as indicated by a broken line in Fig. 11 in the case of the aforementioned Video on Demand. As shown in Fig. 11, receiving and transmitting apparatuses and the like used for the television and satellite broadcasts are provided in a center station (head end) HE of the CATV system. Multi-channel television signals, which have been transmitted at suitable signal levels, are distributed to each of subscribers through a relay transmission line called a "trunk line system TRK" and a distribution system in which a splitter (tap-off) TOF comprised of passive elements is electrically connected to the output of a high output amplifier HLA.

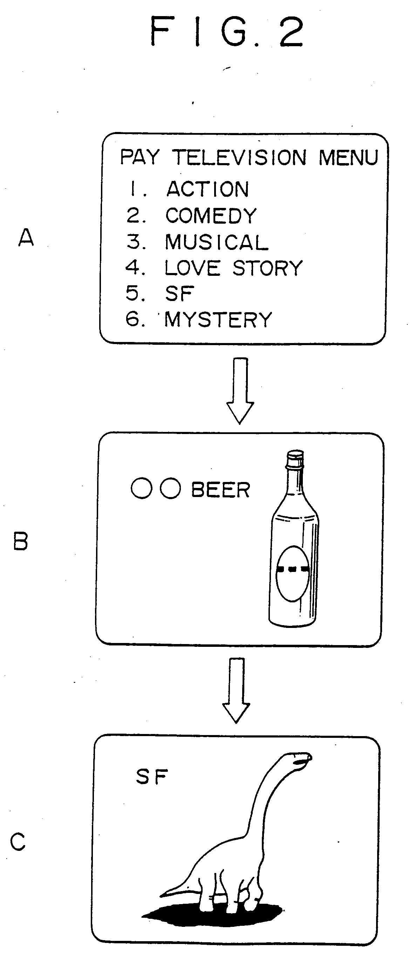

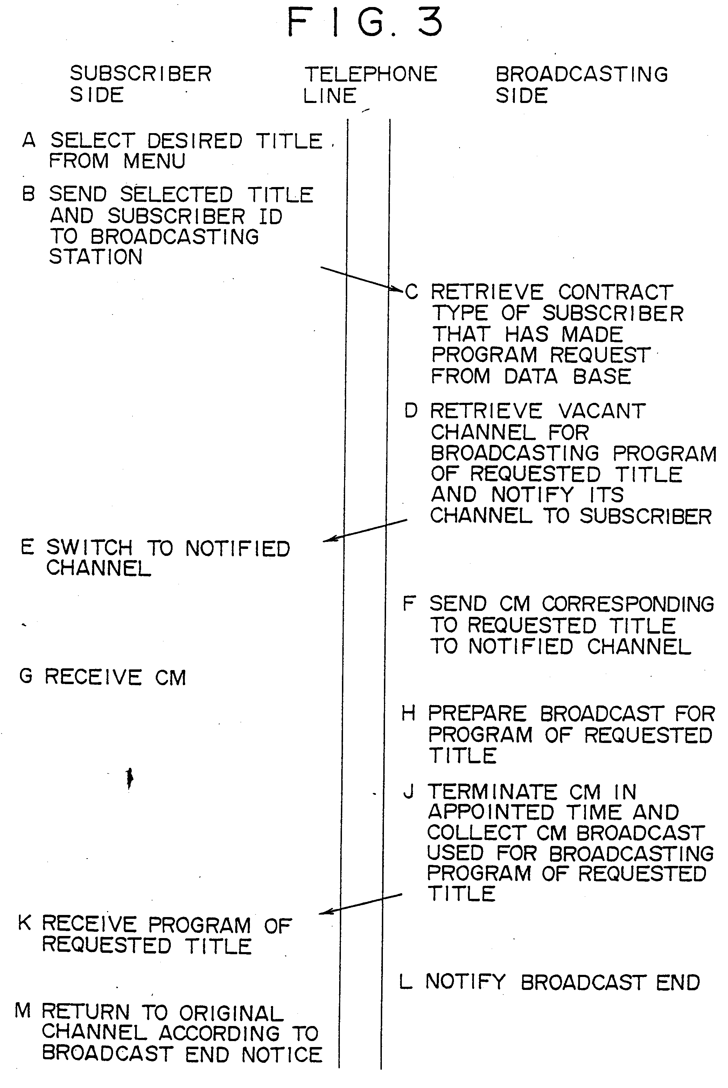

Processes shown in Fig. 3 are performed on the subscriber side, the broadcasting station side and between the two. In Step A, the subscriber first selects a title of a desired program such as an SF(science fiction) from a program menu shown in Fig. 2A. This menu may be broadcasted via a specific predetermined channel and would act to introduce the contents or program titles of programs broadcasted through other respective channels provided via the CATV system. . Alternatively, the menu information may be sent at a specific channel according to a request transmitted from the subscriber.

In Step B, the selected program title and an identification number (ID) of the subscriber are transmitted via a modem and telephone line from the receiving side, or subscriber, to the broadcasting station where a broadcast for the program of the selected title is initiated in accordance with the title and ID information transmitted from the receiving side. Just as there is an ID for the subscriber, there may also be an ID for a cable box, a subscriber's telephone number or the like. This ID could, however, be the same for all or some these devices.

In Step C, the broadcasting station retrieves the type or status of the subscriber's service preferences, or contract with the broadcasting service provider, from a data base usually located, for example, on the broadcasting station side using the ID for the subscriber that has requested the program broadcast as a key, or look up address. Alternatively, there is a case in which information about the type, or status, of the subscriber's contract/service preferences is sent from the subscriber side, as will be described later.

Based upon the service preference information retrieved from the database, a decision is made as to whether CM should be broadcast along with the program material. If the preference information indicates that CM is to be broadcasted, then a time interval required to broadcast the CM, the number of CM, and the kind of CM, etc. are set in accordance therewith.

In the next Step D, an available channel for broadcasting the requested program is selected and the number, or identifier, thereof is notified to the subscriber side (advisory message) via the telephone line/modem.

In Step E, a tuner in the cable box on the subscriber side selects or is tuned to the channel number identified by the broadcast side via the telephone line/modem and is held in a state of waiting for the broadcasting of the program material of the requested title.

In Step F, the broadcasting station sends a CM corresponding to in accordance with the service preference information retrieved from the database, to the channel notified to the subscriber in accordance with the aforementioned setting. In the next Step G, the subscriber receives the CM in the form of an image/message as shown by example in Fig. 2B.

In Step H, the broadcasting station makes arrangements for the broadcasting of the program material of the requested title inclusive of a period in which the CM is being broadcasted to the subscriber side, if the retrieved preference data indicates that such should be done. In the next Step J, the broadcasting station terminates or finishes the CM broadcast by the appointed time and then begins the broadcast of the program material of the requested title.

The type of an actually broadcasted CM, the time taken to broadcast the CM, etc. are collected and stored in a memory means. This information can then be used to calculate reductions in the audience fee charged to the subscriber and to calculate any advertising fees charged to the advertisers.

In Step K, the subscriber receives the program of the requested title such as an SF as shown by example in Fig. 2C. When the program material broadcast is terminated, the broadcasting station notifies, or provides a broadcast end notice to the subscriber side via the telephone line/modem as illustrated in Step L.

In Step M, the tuner of the cable box on the subscriber side is switched from the channel on which the requested program material was broadcast, back to the channel which was selected prior to the reception/request of the requested program material all in response to the broadcast end notice.

In the case of the Video on Demand, televising charges or rates may be set to any one of a plurality of levels, such as, for example, a level that increases the audience fee or advertising charge with respect to a CM applied to a popular title/selection, according to the frequency and timing of the broadcast CM.

Further, a system configuration on the broadcasting station side can be simplified by broadcasting the CM through each of a plurality of available channels for the Video on Demand at all times. In this case, however, advertising charges for broadcasting the CM for a period of time during which the frequency of access to the broadcasting station by the subscriber is high may be set so as to reflect the wide exposure/viewing of the CM.

In the bi-directional broadcasting system described above, the CM can be sent to each subscriber who view the program broadcasts, according to the frequency of CM acceptable to each viewer as indicated by retrieved service preference information, so as to accurately correspond to the degree of allowance of CM for each viewer/subscriber.

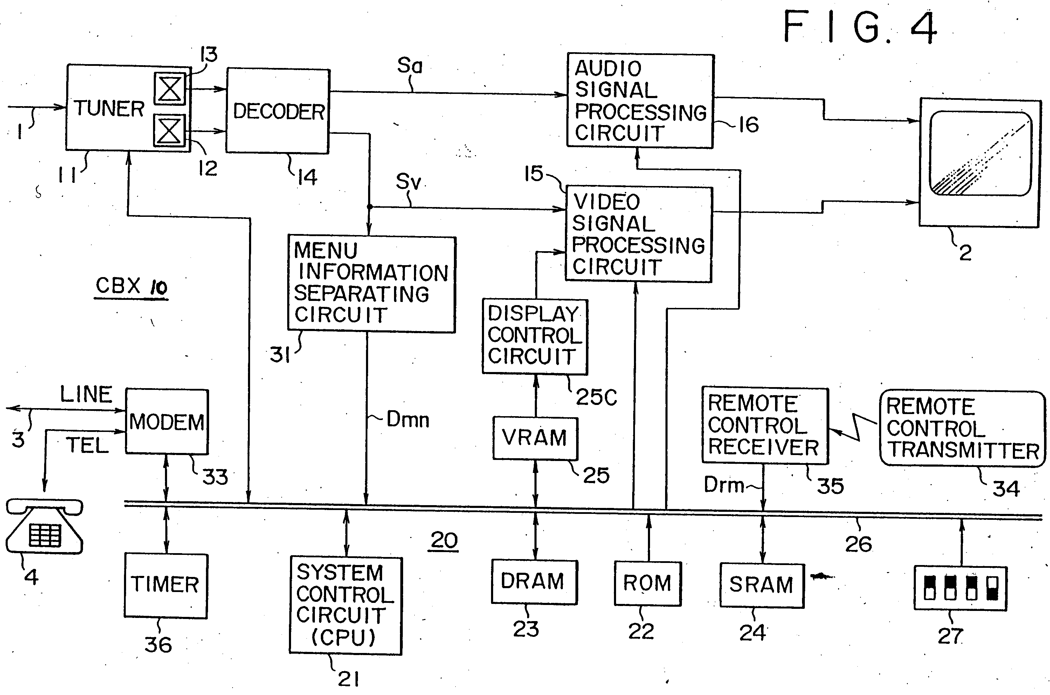

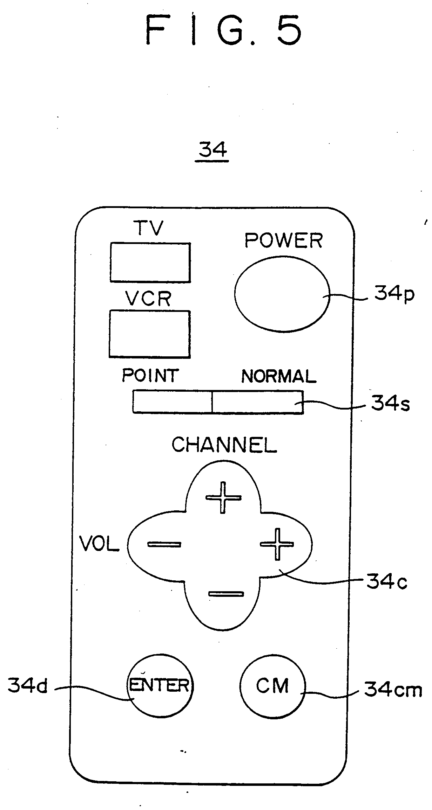

The construction of one embodiment in which a bi-directional broadcast receiving apparatus according to the present invention is applied to a cable box will now be described with reference to Figs. 4 through 6. The overall construction of the embodiment is shown in Fig. 4'and the structure of it is illustrated in Fig. 5.

Referring to Fig. 4, a CBX, or cable box, is shown. Designated at numeral 10 is a signal system used for the CBX. Reference numeral 20 indicates a system for controlling the signal system 10. A television broadcasting signal received from a lead-in cable 1 is supplied to a tuner 11. The tuner 11 includes a video demodulator 12 and an audio demodulator 13, which respectively demodulate a video signal and an audio signal. The video signal Sv and the audio signal Sa outputted from the video and audio demodulators 12 and 13 are respectively supplied to a video signal processing circuit 15 and an audio signal processing circuit 16 through a decoder 14. Thereafter, the outputs of both the video signal processing circuit 15 and the audio signal processing circuit 16 are supplied to a television receiver 2.

The tuner 11 is supplied with a station-selecting control signal used for a channel changeover from the control system 20. Further, the video signal processing circuit 15 and the audio signal processing circuit 16 are also supplied with suitable video and audio control signals from the control system 20.

The control system 20 comprises a system control circuit (CPU) 21, a ROM 22, a DRAM 23, a SRAM 24 and a video RAM (VRAM) 25 all of which are electrically connected to a system bus 26. The ROM 22 stores therein various control programs as well as a processing program to be described later, for receiving and taking in menu data and stores therein data about fonts and graphics for display. The DRAM 23 is mainly used as a working area for computation and the SRAM 24 stores therein information set to the receiving apparatus itself, ID information, etc. Further, the video RAM 25 is used for display. A display control circuit (display controller) 25C is electrically connected to the video RAM 25. The display control circuit 25C controls reading of video data from the video RAM 25 and writing of it therein and converts the read video data into an analog video signal. The analog video signal obtained from the display control circuit 25C is supplied to the video signal processing circuit 15 where it is superimposed on the video signal Sv produced from the decoder 14 in cooperation with the control of the video signal processing circuit 15 by the control circuit 21. Alternatively, both signals are combined into one under the switching control of the video signal processing circuit 15 by the control circuit 21.

In the present embodiment, a dip switch 27 for setting the frequency of CM broadcasts upon broadcasting of program material, based on subscriber preferences or the type of service contract between each subscriber and the broadcasting station as described above is provided in the control system 20 and is electrically connected to the bus 26.

The dip switch 27 is set as a 4-bit switch as shown in Fig. 4, for example and can meet or cope with the types of sixteen kinds of contracts or service preferences. Incidentally, the dip switch 27 may be provided within the enclosure of the cable box thereby, inhibiting the viewers ability to change the above setting of the dip switch 27. As an alternative to the dip switch 27, a software switch may be stored in the SRAM 24. Further, either or these switch examples may be implemented so as to be remotely controllable by the broadcast service provider.

Input/output ports provided between the system bus 26 and the respective components are omitted from Fig. 4 for simplification of illustration. Such features will easily be recognized as being encompassed within the present invention by those of ordinary skill in the art.

In the present embodiment, a menu information separating circuit 31 is provided to separate the aforementioned menu information, Dmn, from the video signal Sv. The menu information separating circuit 31 is electrically connected to the system bus 26 in the control system 20. The control system 20 takes in the separated menu information Dmn.

In the present embodiment as well, a modem 33 for data communications is provided to meet the aforementioned bi-directional broadcasting program. A telephone line 3 is electrically connected to a line connecting terminal Line of the modem 33 and a telephone set 4 is connected to a telephone terminal Tel. The modem 33 is electrically connected to the system bus 26 of the control system 20 and is activated so as to take various information sent from the broadcasting station in the control system 20 via the telephone line 3.

An infrared remote control signal transmitted from a remote control transmitter (commander) 34, for example, is received by a remote control receiver 35 and is decoded by a decoding circuit which is omitted in the drawing but included in the remote control receiver 35. Thereafter, a remote control signal Drm decoded by the decoding circuit is sent to control system 20.

Next, controls corresponding to user's operations by the remote control transmitter 34 are carried out by the CPU 21 in accordance with the program stored in the ROM 22. In the case of remote- controlled operations such as a station selection , volume control, etc., a tuner's station selection and a volume control are executed and at the same time font data used for displaying necessary characters and symbols is read from the ROM 22 and transferred to the video RAM 25. The data transferred to the video RAM 25 is supplied to the video signal processing circuit 15 so as to be combined (e.g., superimposed on) with the video signal Sv. As a result, the superimposed signal is displayed on the screen of the television receiver 2 for a suitable time interval.

Data about the station selection, the volume control, etc. are written into the nonvolatile SRAM 24 each time their corresponding operations are performed. When a power source is turned on again after it has been first turned off, a so-called last memory function can be realized which allows viewing of the same channel at the same volume level as that which existed immediately before the turning off of the power source.

In the present embodiment, time data produced from a timer circuit 36, for notifying real time and generating or triggering an interrupt in a predetermined time is inputted to the control system 20.

As shown in Fig. 5, the remote control transmitter (commander) 34 employed in the present embodiment comprises a power button 34p for controlling the turning on and off of the power source for the cable box and the television receiver, a cross-type seesaw button 34c for performing the control of station selection and volume, and a decision button 34d for entering a decision made as to the aforementioned menu selecting operation. Further, the remote control transmitter 34 also has a slide switch 34s.

In the present embodiment, when the upper or lower side of the cross-type seesaw button 34c is pressed under a normal mode in which the slide switch 34s is on the normal side (right side in Fig. 5), the channel numbers in the tuner 11 are controlled so as to successively increase or decrease. Further, when the right or left side of the seesaw button 34c is pressed, the volume or sound level is controlled so as to successively increase or decrease in stepwise manner.

When a function assigned to the seesaw button 34c is switched or transformed and the upper side of the seesaw button 34c is pressed under a pointer mode in which the slide switch 34s is changed to the point side (left side in Fig. 5), the terms to be noted in the menu shown in Fig. 2A are controlled so as to move in an upward direction. When the lower side of the seesaw button 34c is pressed, the noted terms in the menu are controlled so as to move in a downward direction. When the right side of the seesaw button 34c is pressed where the size of the menu is large and the number of terms to be noted is relatively increased, the terms to be noted in the menu are controlled so as to move in a right direction. When the left side of the seesaw button 34c is pressed, the terms to be noted in the menu are controlled so as to move in a left direction.

The transformation of the function assigned to such a control button is performed using a conversion table stored in a ROM (not shown) incorporated in the commander 34 according to a one-bit flag rendered up or set under the pointer mode in which the slide switch 34s is positioned on the point side. The command received by the remote control receiver 35 is recognized by the CPU 21 as a menu selection command.

The remote control transmitter 34 employed in the present embodiment is provided with a control button 34cm for changing the state of yes or no of reception of the aforementioned CM broadcast.

The control button 34cm is normally held in a state of maintaining the setting of the dip switch 27 in the cable box CBX as it is.

When the viewer controls the control button 34cm, the cable box CBX can be changed into a CM reception prohibiting state regardless of the setting of the dip switch 27.

Further, when the control button 34cm and the seesaw button 34c are simultaneously operated, the frequency of broadcasting CM can be increased or decreased step by step over a level range from a level indicative of the frequency of CM broadcasting, which is set to the dip switch 27 to a level at which no CM enters into the broadcast or a maximum level indicative of the frequency of CM broadcasting, which is set thereto.

Incidentally, the control button 34cm may be operated when the subscriber makes a request to the broadcasting station for transmission of the desired program described in Step B of Fig. 3.

When the level indicative of the frequency of CM broadcasting is changed under the operation of the control button 34cm, the changed level is notified to the broadcasting station through the modem 33. On the broadcasting station side, the rate of reduction in the audience charge with respect to the pay program is reduced or increased according to the changed level.

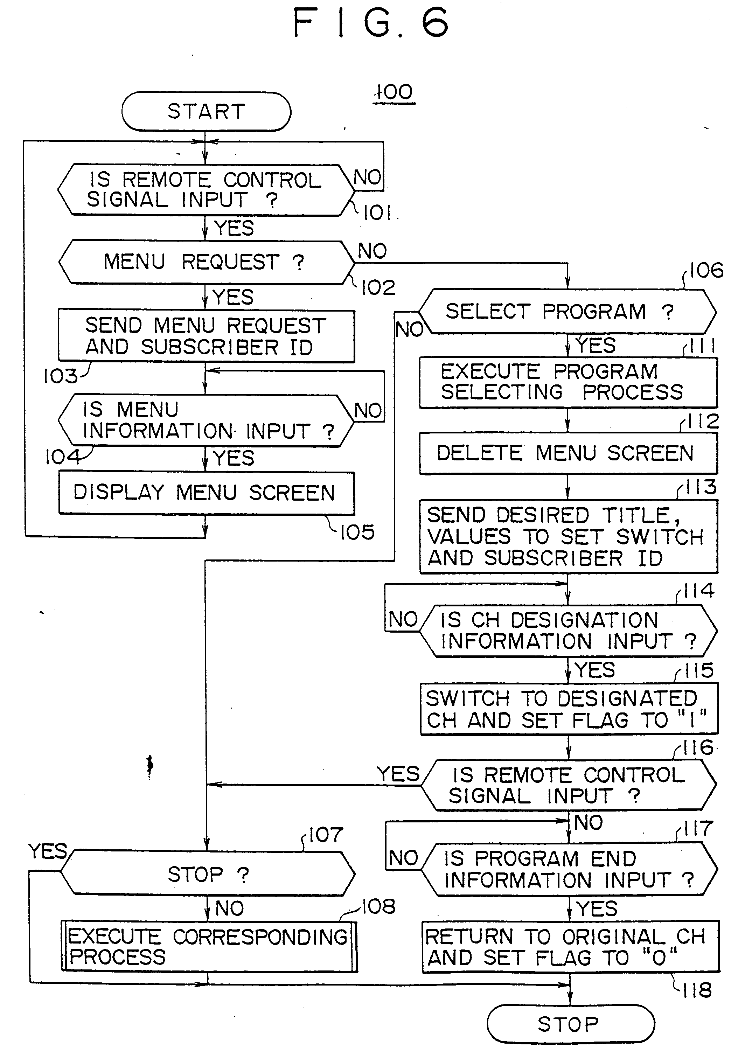

A process of receiving a desired televised pay program, which is applied to the embodiment shown in Fig. 4, will now be described with reference to Fig. 6. In Fig. 6, reference numeral 100 indicates a Video-on-Demand processing routine executed in the embodiment shown in Fig. 4.

In Step 101, a decision is first made as to whether the remote control signal Drm has been outputted from the remote control receiver 35. If it is judged in Step 101 that the answer is YES, it is then determined whether the remote control signal Drm indicates a program menu transmission request (Step 102). If the remote control signal Drm is found to be the program menu transmission request, then information about that request and identification information (ID) about the subscriber are transmitted to the broadcasting station through the modem 33 (Step 103).

In the next Step 104, it is determined whether or not the menu information Dmn has been outputted from the menu information separating circuit 31. If it is judged in Step 104 that the answer is YES, then the menu information Dmn is written into the DRAM 23. Based on the menu information Dmn, an image of a menu screen is produced on the VRAM 24 from the data about the fonts and graphics stored in the ROM 22, so that the menu screen shown in Fig. 1A is displayed on the television receiver 2 (Step 105). The processing returns to Step 101.

When the remote control signal Drm is inputted by the re-operation of the viewer and it is judged in Step 102 that the remote control signal Drm is not indicative of the menu request, the processing proceeds to Step 106 where it is determined whether or not the remote control signal Drm indicates a program selection. If it is determined in Step 106 that the answer is NO, then the processing proceeds to Step 107 where it is judged whether or not the program selection should be stopped. If it is judged that the program selection remains continued, then the processing proceeds to a subroutine 108 where a process corresponding to the contents of the remote control signal Drm, such as volume control is executed.

On the other hand, if it is judged in Step 106 that the remote control signal Drm indicates the program selection, then the processing proceeds to Step 111 where a program selecting process is executed. Thereafter, the menu screen is deleted in Step 112. The deletion of the menu screen is performed by clearing the VRAM 24, for example.

In Step 113, a plurality of pieces of information about a desired title, values (frequency of CM broadcasting) set to the dip switch 27, a subscriber's ID, etc. are transmitted to the broadcasting station through the modem 33.

In the next Step 114, it is judged whether CH (channel) designation information described in Step D of Fig. 3 has been transmitted from the broadcasting station. If the CH designation information is found to be incoming, then the tuner 11 is switched to a designated CH in response to the station-selection control signal outputted from the CPU 21 and a reception flag is set to "1" (Step 115).

As described above, this state shows a state for waiting for the broadcasting of a program of a desired title. When the dip switch 27 is set so as to allow the CM broadcast, the CM shown in Fig. 1B is received by the television receiver 2 over a predetermined time. After the reception of the CM, the program of the desired title shown in Fig. 1C is received by the television receiver 2.

On the other hand, when the dip switch 27 is set so as to inhibit the CM broadcast, only the program of the desired title shown in Fig. 1C is received by the television receiver 2.

When the remote control transmitter 34 is operated during the reception of the CM or the desired program of title, it is determined in Step 116 whether the remote control signal Drm is incoming. If the answer is YES in Step 116, then the processing proceeds to the subroutine Step 108 through Step 107, where the process corresponding to the contents of the remote control signal Drm is executed in the same manner as described above.

When the broadcasting of the program of the desired title is ended, the program end information is sent from the broadcasting station through the modem 33 as described above. It is therefore determined in Step 117 whether the program end information is inputted. If the answer is YES in Step 117, then the processing proceeds to Step 118 where the tuner 11 is returned to the original CH in response to the station-selection control signal outputted from the CPU 21 and the reception flag is set to "0". As a result, the routine 100 is completed.

In the Video on Demand employed in the embodiment illustrated in Fig. 4 as described above, the dip switch 27 in the cable box CBX is set according to the type of the subscriber's contract, i.e., the frequency of the CM broadcast allowable by each viewer. It is determined based on the setting of the dip switch 27 whether the CM is broadcasted. If it is judged that the CM is broadcasted, the frequency of the CM broadcasted the like are set by the broadcasting station. Therefore, each viewer can selectively receive the CM according to the permissible degree of CM.

In the case of the Video on Demand applied to the aforementioned bi-directional broadcasting system, the CM based on the normal video signal is broadcasted through the same channel designated by the broadcasting station prior to the broadcasting of the program of the title selected by the subscriber. However, CM information may be broadcasted at all times in the form of image information for character multi-broadcasting. Commercial message information which includes image information comprised of characters and graphics is combined with a broadcast program material television signal in multiplex form. This signal is broadcast to the cable box receiver in the form of a digital signal. This signal is decoded on the receiving or cable box side and the decoded signal is stored into memory for future recall and display on the television receiver/display screen.

On the transmitting side, character or graphical information is combined with an additive sound, or audio information related to the character/graphical information to create character broadcast screens. The respective character broadcasting screens are coded and added with data for designating a program number, a page number, a display mode, etc. The so-processed screen information is sent after being superimposed on 14th H through 16th H and a 21st H in the vertical blanking time of the television signal.

On the receiving side, at an appropriate time, a character signal is separated from the demodulated video signal so that character broadcast data is decoded. Pattern data or graphic data read from a character generator is written into a display memory according to the decoded data and converted into the video signal so as to be displayed on a television picture tube. Further, an electronic sound is reproduced through speakers according to additive sound data read out from storage memory.

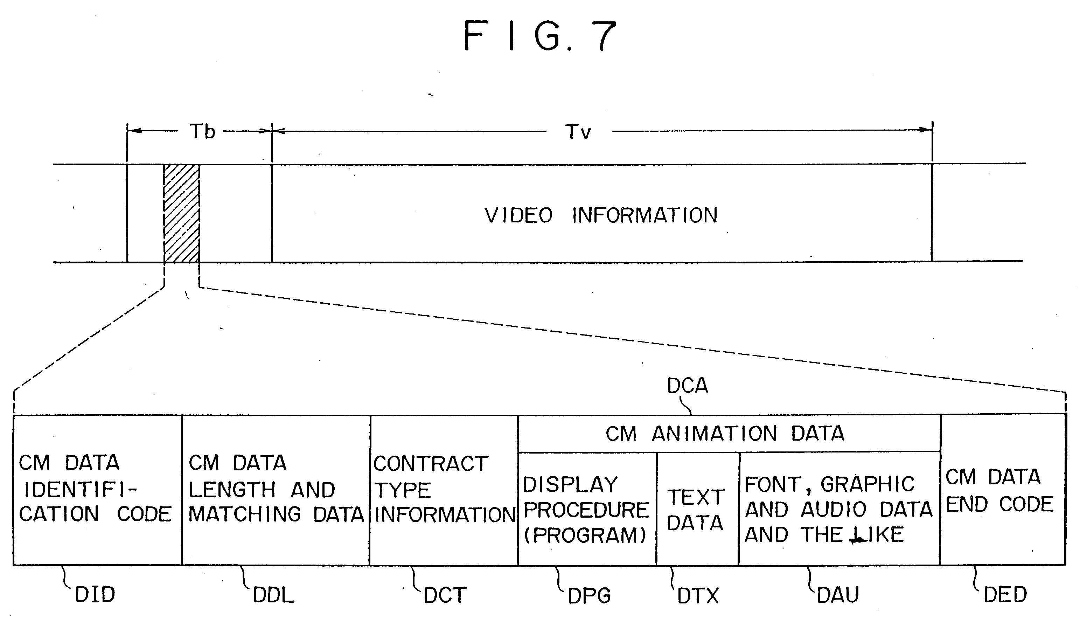

As shown in Fig. 7, the CM information employed in the present embodiment comprises a CM data identification code DID, a CM data length and matching data DDL, contract-type information DCT and a CM data end code DED inclusive of display CM animation data DCA.

The CM animation data DCA comprises display procedure (program) data DPG, text data DTX and data DAU about fonts, graphics, voices, etc.

A receiving apparatus to be described below sets the text data DTX and the data DAU to data capable of being outputted as, for example, visual representations of a character string, a still picture, an animation, etc. or an additive sound in accordance with the display program data DPG. Further, the receiving apparatus starts to display the data at a predetermined timing.

Incidentally, the display start timing can correspond to a predetermined specific operation such changing the present channel to a channel designated by the broadcasting station in the case of the Video on Demand.

When the CM information is broadcasted in the form of the image information for the character multi-broadcasting, the menu information used in the case of the Video on Demand can also be transmitted in character multiplex form.

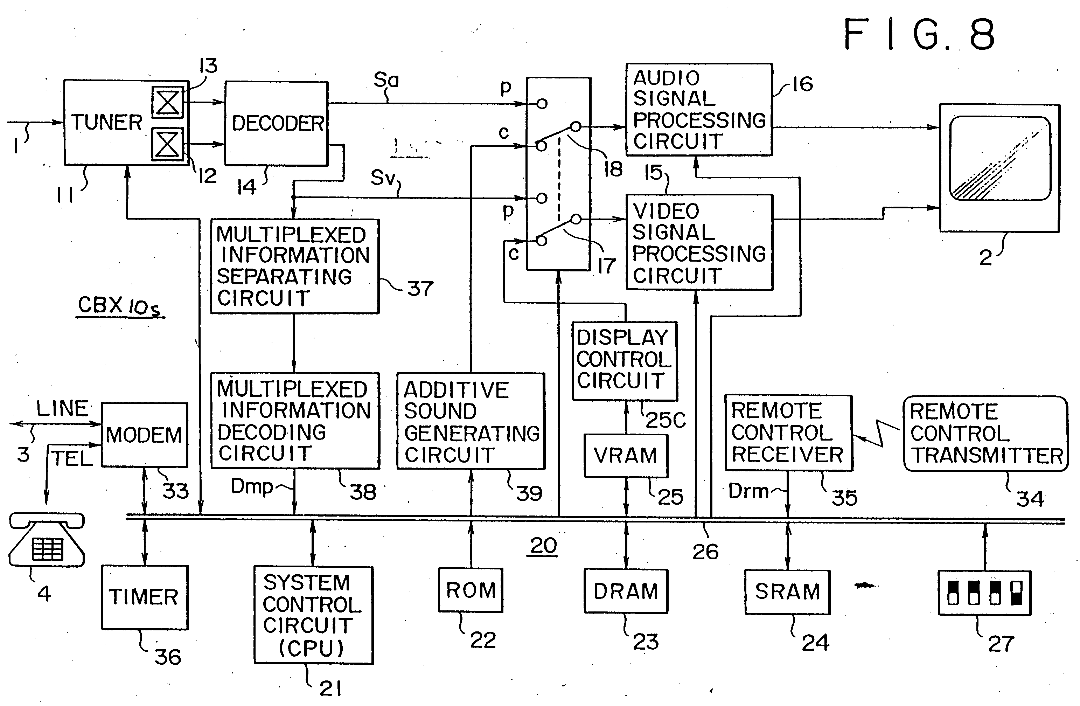

Another embodiment of a bi-directional broadcast receiving apparatus, which can meet the aforementioned multiplexed CM information, will now be described,with reference to Figs.8 through 10.

The overall structure of the receiving apparatus of the present invention is shown in Fig. 8. In Fig. 8, elements corresponding to those shown in Fig. 4 are identified by like reference numerals and the description of common elements will therefore be omitted.

In the embodiment illustrated in Fig. 8, two-throw changeover switches 17 and 18 are respectively interposed between a decoder 14 in a signal system 10S and a video signal processing circuit 15 and between the decoder 14 and an audio signal processing circuit 16. Video and audio signals Sv and Sa are supplied to their corresponding signal processing circuits 15 and 16 through p-side contacts and movable contacts of the two-throw changeover switches 17 and 18.

In the embodiment of Fig. 8 as well, a multiplexed information separating circuit 37 and a multiplexed information decoding circuit 38 are provided to meet or correspond to the aforementioned multiplexed CM information. Further, an additive sound generating circuit 39 is provided.

The multiplexed information separating circuit 37 is supplied with the video signal Sv in common with the p-side contact of the changeover switch 17. The output of the multiplexed information separating circuit 37 is supplied to the multiplexed information decoding circuit 38 where multiplexed information Dmp is decoded and taken in a control system 20.

On the other hand, the additive sound generating circuit 39 is electrically connected to a system bus 26 of the control system 20. The output of the additive sound generating circuit 39 is supplied to a c-side contact of the changeover switch 18. Further, the output of a display control circuit 25C is supplied to a c-side contact of the changeover switch 17. Each of the changeover switches 17 and 18 is supplied with a changeover control signal from the control system 20. The remaining structure is shown in Fig. 4.

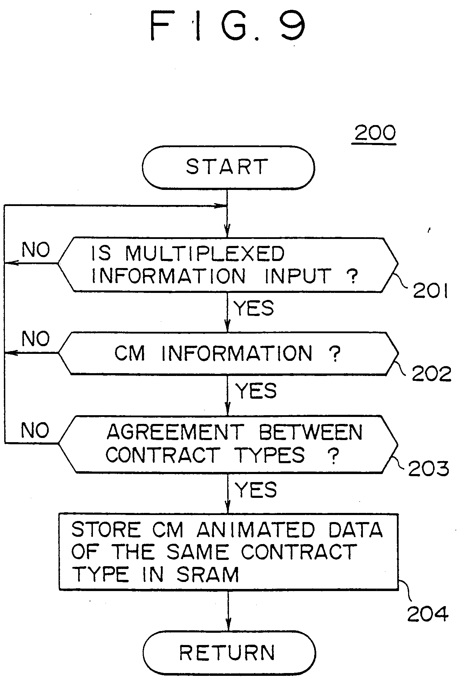

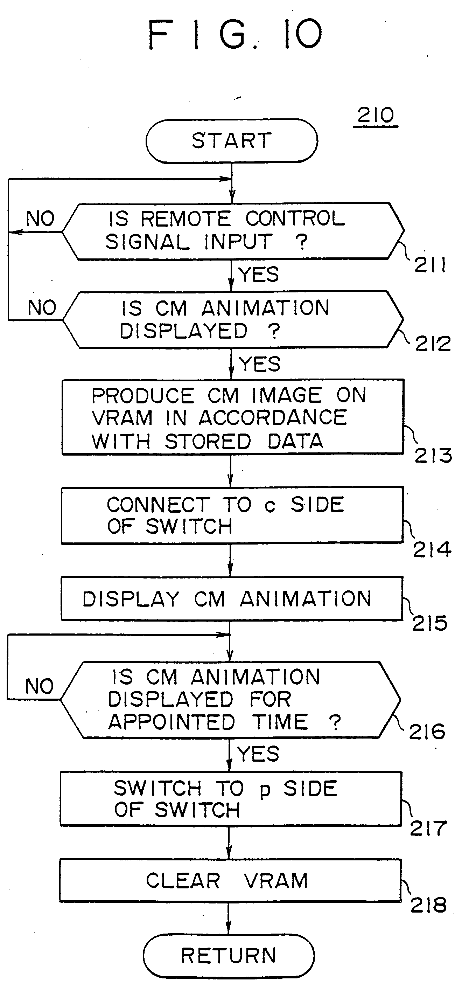

The process for receiving the multiplexed CM information employed in the embodiment illustrated in Fig. 8 will now be described with reference to Figs. 9 and 10.

In Fig. 9, reference numeral 200 indicates a processing routine for receiving the multiplexed CM information employed in the embodiment illustrated in Fig. 8. On the other hand, designated at numeral 210 in Fig. 10 is a processing routine for displaying the multiplexed CM information employed in the embodiment illustrated in Fig. 8.

In Step 201 in Fig. 9, it is determined whether the multiplexed information Dmp separated from the video signal Sv by the multiplexed information separating circuit 37 and decoded by the multiplexed information decoding circuit 38 is incoming. If the answer is YES in Step S201, then the processing proceeds to Step 202 where it is determined based on the CM information identification code DID whether or not the incoming multiplexed information Dmp corresponds to the CM information shown in Fig. 7. When the CM information shown in Fig. 7 arrives, the processing proceeds to the next Step 203 where it is judged based on the contract type information DCT whether the incoming CM information corresponds to CM information of a type identical to that of a contract related to a cable box CBX employed in the embodiment of Fig. 8. If the incoming CM information is found to be one of the type identical to that called for by the contract/service preferences in Step 203, then the processing proceeds to Step 204 where the CM animation data DCA is stored in a SRAM 24, after which the processing returns to Step 201.

When the CM animation data DCA already exists in the SRAM 24, new data is overwritten onto the old data so that the CM animation data DCA is updated.

In Step 211 shown in Fig. 10, it is determined whether a remote control signal Drm is outputted form a receiver 35. If the remote control signal Drm arrives, then the processing proceeds to Step 212 where it is judged whether the incoming remote control signal Drm is a signal that should be used for designating a predetermined specific operation such as a selection of a channel assigned by the broadcasting station, for example and for displaying the CM animation.

When it is necessary to display the CM animation, the processing proceeds to Step 213 where an CM image is produced on a video RAM (VRAM) 25 in accordance with the CM animation data DCA stored in the SRAM 24.

When voice or audio data is included in the CM animation data DCA in this case, an audio signal corresponding to the audio data is produced in the additive sound generating circuit 39. In Step 214, the movable contacts of the changeover switches 17 and 18 are electrically connected to their corresponding c-side contacts based on the changeover control signal outputted from the control system 20 as shown in the drawing.

The CM image read from the video RAM 25 is converted into an analog video signal by the display control circuit 25C. Thereafter, the converted signal is supplied to the video signal processing circuit 15 through the c-side contact and movable contact of the one changeover switch 17, so that a CM image comprised of animations is displayed over a substantially entire area or a partial area of the screen of a television receiver 2 under a mode in which a raster is normally taken as a background (Step 215).

The animated CM image is created by successively rewriting a part or all of the image on the video RAM 25 in accordance with the display program data DPG in the CM animation data DCA.

When the audio data is included in the CM animation data DCA, an audio signal produced from the additive sound generating circuit 39 is supplied to the audio signal processing circuit 16 through the c-side contact and movable contact of the other changeover switch 18, so that an added sound is outputted through speakers (not shown) of the television receiver 2.

In Step 216, it is determined whether a CM animation is being displayed until the elapse of a predetermined time. When the predetermined time has elapsed, the processing proceeds to Step 217 where the movable contacts of the changeover switches 17 and 18 are switched to the p-side contacts respectively contrary to the illustration shown in Fig. 8 in accordance with the changeover control signal produced from the control system 20. Next, the video and audio signals Sv and Sa produced from the tuner 11 are supplied to their corresponding signal processing circuits 15 and 16 through the p-side contacts and movable contacts of the changeover switches 17 and 18. As a result, an image of a program of a title selected by a subscriber is displayed on the screen of the television picture tube 2 and the voices in the program are reproduced through the speakers (not shown) of the television receiver 2.

The video RAM 25 is cleared in the next Step 218 and the processing returns to Step 211. Since the receiving apparatus is provided so as to correspond to the aforementioned multiplexed CM information in the embodiment illustrated in Fig. 8, the CM image is of inferior quality as compared with the embodiment of Fig. 4 using the normal video signal. It is however not always necessary to set a system of transmitting information from the broadcasting station to the subscriber to a wire system. The transmission system can be applied to the normal broadcast using a ground wave or a satellite broadcast. In this case, a system like a character multiplex broadcasting tuner may be provided on the viewer side. Further, since the system on the broadcasting side can be simplified in structure, the constructional base of the broadcasting system becomes advantageous in terms of cost.

If a point in which the Video on Demand is restricted by the number of usable channels is taken into consideration, then a data-transmitted CM animation may be more desirable as compared with a CM based on the normal video signal.

According to the present invention, as has been described above, a plurality of pay video programs are prepared on the broadcasting side and broadcasted as occasion demands according to the selection of a specific pay video program by the receiving side. Further, a predetermined CM is broadcasted according to the allowable degree of video reception by each viewer prior to the broadcasting of the pay video program selected by the receiving side. Therefore, the broadcasting side can properly correspond to the allowable degree of reception of CM by each viewer. Further, when the CM is sent, the viewer can reliably view it.

On the other hand, an allowable-degree-of-reception setting means attached to a receiver is set on the receiving side according to the allowable degree of video reception by each viewer. Information about its setting is transmitted to the broadcasting side through a communicating means upon selecting a pay video program. Therefore, each viewer can selectively receive the CM according to the allowable degree of video reception and audience charges are reduced according to the frequency of reception of the CM.

Further, since an control unit for controlling the frequency of reception of the CM is provided in a remote control device, the setting of the frequency of CM reception can be changed according to the contents of a pay video program and the like.

Having now fully described the invention, it will be apparent to those skilled in the art that many changes and modifications can be made without departing from the spirit or scope of the invention as set forth and claimed herein.

## Claims

1. A bi-directional broadcasting system for preparing a plurality of pay video programs and a plurality of channels on the broadcasting side and designating one of said plurality of channels according to a selection of a specific pay video program by a receiving side to thereby broadcast said selected pay video program through said selected channel at designated time, characterized in that predetermined advertisement material is broadcasted along with the broadcast for said selected pay video program according to the allowable degree of video reception by the receiving side.

2. The bi-directional broadcasting system as claimed in Claim 1, wherein said advertisement image is sent from the broadcasting side in data form.

3. A bi-directional broadcast receiving apparatus provided with selecting means capable of selectively receiving a plurality of channels and communicating means capable of communicating with a broadcasting side in such a manner that said communicating means requests the broadcasting side to broadcast a desired pay video program and said selecting means selects one of said plurality of channels, which is designated by the broadcasting side to thereby receive the broadcast for the desired pay video program, said bi-directional broadcast receiving apparatus comprising:
allowable-degree-of-reception setting means for setting the allowable degree of reception of advertisement material broadcasted from the broadcasting side along with the desired pay video program.

4. The bi-directional broadcast receiving apparatus as claimed in Claim 3, wherein said allowable-degree-of-reception setting means includes a group of switches.

5. A remote control device suitable for use in a bi-directional broadcast receiving apparatus, which is capable of controlling at least selecting means of said bi-directional broadcast receiving apparatus, comprising:
allowable-degree-of-reception controlling means for controlling the allowable degree of reception of advertisement material broadcasted along with a desired pay video program received by said bi-directional broadcast receiving apparatus.

6. A bi-directional broadcast system comprising:
subscriber cable box comprising:
broadcast receiving means for receiving and decoding program material, commercial message and menu information transmitted from a broadcast station;
means for displaying said menu information on a display device;
user input means for providing user input data corresponding to menu information displayed on a display device to said broadcast station;
broadcast station comprising:
transmitter for encoding and transmitting program material, commercial message information and menu information to said subscriber cable box;
user input receiving means for receiving said user input data from said subscriber cable box;
first storage means for storing subscriber data comprising user preference information;
second storage means for storing program material;
third storage means for storing commercial message information;
menu information generating means for providing menu information; and
controller means for controlling said transmitter to transmit program material stored in said second storage means, commercial message information stored in said third storage means, and menu information generated by said menu information generating means to said subscriber cable box at appropriate times, in accordance with said user input data received from said cable box and said subscriber data stored in said first storage means.

7. A bi-directional Broadcast system according to claim 6 wherein said menu information comprises titles of program material available for broadcast and the available times of broadcast thereof.

8. A bi-directional Broadcast system according to claim 6 wherein said user input data comprises information representing a program material title and broadcast time selected by a user.

9. A bi-directional Broadcast system according to claim 6 wherein said user preference information comprises data representing an allowable degree of commercial message information to be transmitted along with program material.

10. A cable box for use in a bi-directional broadcast system comprising:
broadcast receiving means for receiving and decoding program material, commercial message and menu information transmitted from a broadcast station;
means for displaying said menu information on a display device;
user input means for providing user input data corresponding to menu information displayed on a display device and user preference information to said broadcast station;
said user preference information comprises data representing an allowable degree of commercial message information to be transmitted by said broadcast station along with said program material.

11. A cable box for use in a bi-directional broadcast system comprising:
broadcast receiving means for receiving and decoding program material, commercial message and menu information transmitted from a broadcast station;
means for displaying said menu information on a display device;
user input means for providing user input data corresponding to menu information displayed on a display device and user preference information to said broadcast station;
commercial message storage means for storing said commercial message information received from said broadcast station;
controller means for causing said commercial message information stored in said commercial message storage means to be displayed on a display device in response to a commercial message initiate signal from said broadcast station; and
said commercial message initiate signal is generated at a predetermined time by said broadcast station in accordance with said user input data.

12. A bi-directional broadcast system comprising:
subscriber cable box comprising:
broadcast receiving means for receiving and decoding program material, commercial message and menu information transmitted from a broadcast station, said menu information comprises titles of program material available for broadcast and the available times of broadcast thereof;
means for displaying said menu information on a display device;
user input means for providing user input data corresponding to menu information displayed on a display device to said broadcast station;
commercial message storage means for storing said commercial message information received from said broadcast station;
controller means for causing said commercial message information stored in said commercial message storage means to be displayed on a display device in response to a commercial message initiate signal from said broadcast station;
said commercial message initiate signal is generated at a predetermined time by said broadcast station in accordance with said user input data;
said broadcast station comprises:
transmitter means for encoding and transmitting program material, commercial message information and menu information to said subscriber cable box;
user input receiving means for receiving said user input data from said subscriber cable box;
first storage means for storing user preference information comprising a predetermined allowable degree of commercial message information which may be transmitted to be interspersed at appropriate times with said transmitted program material information;
second storage means for storing program material;
third storage means for storing commercial message information;
menu information generating means for providing menu information;
controller means for controlling said transmitter to transmit program material stored in said second storage means, commercial message information stored in said third storage means, and menu information generated by said menu information generating means to said subscriber cable box at appropriate times, in accordance with said user input data received from said cable box and said subscriber data stored in said first storage means;
advisory message generating means for generating and transmitting an advisory message to said cable box to inform a user of the appropriate broadcast channel upon which said program material will be transmitted for reception; and
commercial message initiate signal generator for generating and transmitting said commercial message initiate signal to said cable box.

13. A method of broadcasting program material comprising the steps of :
storing user preference information comprising an allowable degree of commercial message information to be transmitted and displayed during a broadcast of program material to a cable box receiver and which is associated with a particular subscriber, into a first storage means;
storing program material into a second storage means;
storing commercial message information into a third storage means;
broadcasting said program material to a cable box receiver of a particular subscriber;
interspersing said commercial message information into the broadcast of said program material in accordance with said user preference information stored in said first storage means so that said commercial message information stored in said third storage means is interspersed and displayed during the broadcast of said program material at predetermined times during said broadcast of program material, the frequency and duration of which is specified by said user preference information stored in said first storage means.

14. A method of broadcasting program material comprising the steps of:
storing user preference information comprising an allowable degree of commercial message information to be transmitted and displayed during a broadcast of program material to a cable box receiver, and which is associated with a particular subscriber, into a first storage means;
storing program material for broadcast into a second storage means;
storing commercial message information into a third storage means;
broadcasting said program material to a cable box receiver of said particular subscriber;
broadcasting commercial message information to said cable box receiver of said particular subscriber and storing it in a commercial message storage memory within said cable box receiver;
generating a commercial message initiate signal and broadcasting it to said cable box receiver so as to cause said commercial message information stored in said commercial message storage memory to be read out and interspersed within the broadcast program material at predetermined times, the frequency and duration of which are specified by said user preference information.
